# EUROPEAN PATENT SPECIFICATION

(11) **EP 1 460 104 B1**
(45) Date of publication and mention of the grant of the patent: **03.01.2007**
(21) Application number: 02783644.4
(22) Date of filing: 27.11.2002
(51) Int. Cl.: C08L 9/00, C08L 15/00

(54) **RUBBER COMPOSITION, VULCANIZABLE RUBBER COMPOSITION AND DAMPING RUBBER VULCANIZATE**
KAUTSCHUKZUSAMMENSETZUNG, VULKANISIERBARE KAUTSCHUKZUSAMMENSETZUNG UND DÄMPFENDES KAUTSCHUKVULKANISAT
COMPOSITION DE CAOUTCHOUC, COMPOSITION DE CAOUTCHOUC VULCANISABLE ET VULCANISAT DE CAOUTCHOUC D'AMORTISSEMENT

(30) Priority: 30.11.2001 JP 2001367449
(43) Date of publication of application: 22.09.2004
(73) Proprietor: ZEON CORPORATION, Tokyo 100-8323 (JP)
(72) Inventor: KITAHARA, Shizuo, c/o ZEON CORPORATION, Tokyo 100-8323 (JP)
(74) Representative: Albrecht, Thomas
(86) International application number: PCT/JP2002/012369
(87) International publication number: WO 2003/046072

(56) References cited:
- EP-A- 1 099 711
- GB-A- 2 358 022
- JP-A- 54 063 144
- JP-A- 55 152 733
- US-A- 3 274 148
- US-A- 4 678 841
- US-A- 5 171 790
- DATABASE WPI Section Ch, Week 199011 Derwent Publications Ltd., London, GB; Class A18, AN 1990-079257 XP002313668 & JP 02 032135 A (TOYO RUBBER IND. CO., LTD.) 1 February 1990 (1990-02-01)

## Description

### TECHNICAL FIELD

The present invention relates to a rubber composition, a vulcanizable rubber composition, and a damping rubber vulcanizate. More particularly, the present invention relates to a damping rubber vulcanizate having sufficient rubber hardness and excellent damping properties in a wide range from a low temperature to a high temperature, and to a rubber composition and a vulcanizable rubber composition which are suitable for producing the rubber vulcanizate.

### BACKGROUND ART

Conventionally, various damping rubber vulcanizates have been known. A damping rubber vulcanizate absorbs shock energy, has characteristics of reducing shock and noise in vehicles, machines, and apparatuses, as well as ground shock, etc. (such characteristics are hereinafter referred to as "damping properties"), and is used as a shock energy absorber in vibration-free, shock-preventing, or quake-absorbing apparatuses.

As a damping rubber vulcanizate using conjugated diene rubber as the base material, a composition prepared by adding hydrogenated isoprene rubber and a thermoplastic resin to natural rubber disclosed in, for example, Japanese Patent Application Laid-open No. 11-117993 has been known. However, such a damping rubber vulcanizate is not able to adequately satisfy both of the two requirements, excellent rubber hardness and excellent damping properties in a wide temperature range, and thus cannot meet increasingly sophisticating requirements. For this reason, a material exhibiting excellent damping properties in a specific temperature range or a material exhibiting a certain degree of damping properties in the target wide temperature range has been selected from materials with excellent rubber hardness.

Japanese Patent Application Laid-open No. 54-63144 discloses a rubber composition comprising 100 parts by weight of conjugated diene rubber and 0.1-5 parts by weight of cyclized polybutadiene. Japanese Patent Application Laid-open No. 55-152733 discloses a rubber composition comprising 100 parts by weight of conjugated diene rubber and 4-40 parts by weight of cyclized conjugated diene rubber. However, the damping properties of the rubber vulcanizates specifically disclosed in these patent documents have not been satisfactory.

GB2358022 discloses a rubber composition comprising a diene rubber and a cyclized polyisoprene having a level of cyclization of 25-90%. The ratio of Mw/Mn of the cyclized polyisoprene is not disclosed.

US4678841 discloses a process for preparation of a cyclized polyisoprene having a level of cyclization of 40-75% and a ratio of Mw/Mn of not greater than 2.0. A rubber composition comprising a diene rubber and the cyclized polyisoprene is not disclosed.

The present invention has been achieved in view of this situation and has an object of providing a damping rubber vulcanizate having excellent damping properties in a wide range from a low temperature to a high temperature, and a rubber composition and a vulcanizable rubber composition which are suitable for producing the rubber vulcanizate.

### DISCLOSURE OF THE INVENTION

As a result of extensive studies on rubber compositions comprising conjugated diene rubber and a cyclized conjugated diene polymer to achieve the above object, the present inventor has found that a rubber vulcanizate having sufficient rubber hardness and having excellent damping properties in a wide range from a low temperature to a high temperature can be obtained by controlling the rate of mixing conjugated diene rubber and cyclized conjugated diene polymer in a specific range and controlling the rate of cyclization and the molecular weight distribution of the cyclized conjugated diene polymer in a specific range. This finding has led to the completion of the present invention.

Specifically, in the first place, the present invention provides a rubber composition comprising 100 parts by weight of conjugated diene rubber and 5-100 parts by weight of a cyclized conjugated diene polymer with a cyclization rate of 25-90% and a ratio (Mw/Mn) of the polystyrene-reduced weight average molecular weight (Mw) to the polystyrene-reduced number average molecular weight (Mn), each determined by gel permeation chromatography, of 2 or less.

In the second place, the present invention provides a vulcanizable rubber composition comprising the above rubber composition and a vulcanizing agent.

In the third place, the present invention provides a damping rubber vulcanizate obtained by vulcanizing the above vulcanizable rubber composition.

The rubber composition, vulcanizable rubber composition, and damping rubber vulcanizate of the present invention will now be described in detail.

### (Rubber Composition)

The rubber composition of the present invention comprises 100 parts by weight of conjugated diene rubber and 5-100 parts by weight of a cyclized conjugated diene polymer with a cyclization rate of 25-90% and a ratio (Mw/Mn) of the polystyrene-reduced weight average molecular weight (Mw) to the polystyrene-reduced number average molecular weight (Mn), each determined by gel permeation chromatography, of 2 or less.

The conjugated diene rubber used in the present invention is a rubber polymer containing a conjugated diene monomer as the major polymer component. The amount of the conjugated diene monomer in the conjugated diene rubber is preferably 50 percentage by weight or more, more preferably 70 percentage by weight or more, and particularly preferably 95 percentage by weight or more.

The conjugated diene rubber may be either natural rubber or synthetic rubber produced by (co)polymerization of a conjugated diene monomer and, optionally, other polymerizable monomers by a known polymerization method such as an emulsion polymerization method or solution polymerization method.

As the conjugated diene monomer, 1,3-butadiene, isoprene, 2,3-dimethyl-1,3-butadiene, 2-chloro-1,3-butadiene, 1,3-pentadiene, and the like can be used without any specific limitations. These conjugated diene monomers may be used either individually or in combination of two or more. Of these, 1, 3-butadiene and isoprene are preferable, with isoprene being particularly preferable.

As the other polymerizable monomers, aromatic vinyl compounds such as styrene, o-methylstyrene, p-methylstyrene, m-methylstyrene, 2,4-dimethylstyrene, ethylstyrene, p-tert-butylstyrene, α-methylstyrene, α-methyl-p-methylstyrene, o-chlorostyrene, m-chlorostyrene, p-chlorostyrene, p-bromostyrene, 2-methyl-1,4-dichlorostyrene, 2,4-dibromostyrene, and vinylnaphthalene; acrylic acid derivatives or methacrylic acid derivatives such as methyl acrylate, ethyl acrylate, n-propyl acrylate, n-butyl acrylate, methyl methacrylate, ethyl methacrylate, n-propyl methacrylate, and n-butyl methacrylate; α,β-ethylenically unsaturated nitrile compounds such as acrylonitrile and methacrylonitrile; and the like can be used. These monomers may be used either individually or in combination of two or more.

As preferable specific examples of the conjugated diene rubber, natural rubber, isoprene rubber, butadiene rubber, styrene-butadiene rubber, chloroprene rubber, acrylonitrile-butadiene rubber, and combinations of two or more of these rubbers can be given. Of these, natural rubber, isoprene rubber, butadiene rubber, and styrene-butadiene rubber are more preferable, with natural rubber being particularly preferable.

Although there are no specific limitations, the number average molecular weight of the conjugated diene rubber used in the present invention is preferably 10,000-3,000,000, more preferably 50,000-2,000,000, and particularly preferably 100,000-1,000,000. Rubber with too small a number average molecular weight is liquid rubber which may be handled only with difficulty. Rubber with too large a molecular weight, on the other hand, has a high viscosity and, therefore, has inferior processability when preparing a rubber composition or forming the rubber.

A Mooney viscosity (ML₁₊₄, 100°C) of the conjugated diene rubber is usually 10-100, and preferably 20-80. The Mooney viscosity can be measured according to JIS K6300.

The cyclized conjugated diene polymer used in the present invention has a cyclization rate of 25-90% and a ratio (Mw/Mn) of the polystyrene-reduced weight average molecular weight (Mw) to the polystyrene-reduced number average molecular weight (Mn), each determined by gel permeation chromatography, of 2 or less.

The cyclization rate of the cyclized conjugated diene polymer is 25-90%, preferably 40-87%, and more preferably 55-85%. If the cyclization rate is low, the rubber vulcanizate of the present invention exhibits only poor damping properties. Conversely, a high cyclization rate results in an inferior production efficiency of the cyclized conjugated diene polymer.

The cyclization rate (%) of the cyclized conjugated diene polymer refers to the ratio of the number of double bonds possessed by the conjugated diene monomer unit remaining after the cyclization reaction to the number of double bonds possessed by the conjugated diene monomer unit present in the conjugated diene polymer before the cyclization reaction.

The cyclization rate can be determined by measuring the number of double bonds of the conjugated diene monomer unit in a conjugated diene polymer and the number of double bonds of the conjugated diene monomer unit in a cyclized conjugated diene polymer by proton NMR according to a method described, for example, in Manfred Gordon et al., Industrial and Engineering Chemistry, 43 (2), 386 (1951) or Yasuyuki Tanaka et al., J. Polymer Science: Polymer Chemical Edition, 17, 3027 (1979).

The ratio (Mw/Mn) of the polystyrene-reduced weight average molecular weight (Mw) to the polystyrene-reduced number average molecular weight (Mn) determined by gel permeation chromatography (GPC) of the cyclized conjugated diene polymer is 2 or less, preferably 1.1-1.8, more preferably 1.1-1.6, and particularly preferably 1.1-1.4.

If this ratio is too large, the rubber vulcanizate of the present invention has poor damping properties. If this ratio is too small, it is difficult to produce the cyclized conjugated diene polymer.

The polystyrene-reduced weight average molecular weight (Mw) of the cyclized conjugated diene polymer determined by gel permeation chromatography (GPC) is preferably 7,000-500,000, more preferably 20,000-350,000, and particularly preferably 35, 000-250, 000. If the weight average molecular weight is low, the rubber vulcanizate tends to exhibit only poor mechanical strength. A high weight average molecular weight, on the other hand, tends to result in inferior damping properties of the rubber vulcanizate.

The cyclized conjugated diene polymer can be obtained by cyclizing the conjugated diene polymer.

The conjugated diene polymer is a polymer containing a conjugated diene monomer unit as the major polymer component. The amount of the conjugated diene monomer in the conjugated diene polymer is preferably 70 percentage by weight or more, more preferably 80 percentage by weight or more, and particularly preferably 95 percentage by weight or more.

As examples of the conjugated diene monomer, 1, 3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, 3-butyl-1,3-octadiene, and chloroprene can be given. Of these, 1, 3-butadiene and isoprene are preferable, with isoprene being more preferable.

To the extent that the effect of the present invention is not substantially prevented, a copolymer of the conjugated diene monomer and another monomer copolymerizable with the conjugated diene monomer can be used as the conjugated diene polymer.

As examples of the other copolymerizable monomer, aromatic vinyl compounds such as styrene, α-methylstyrene, 4-isopropylstyrene, 4-phenylstyrene, 4-methoxystyrene, 4-methoxymethylstyrene, 4-tert-butoxystyrene, 2-chloro-4-methylstyrene, 2-fluorostyrene, 3-fluorostyrene, pentafluorostyrene, vinyltoluene, vinylnaphthalene, vinylanthracene, and N-vinylpyrrolidone; olefin compounds such as ethylene, propylene, and isobutylene; vinyl compounds other than aromatic vinyl compounds and olefin compounds such as vinyl chloride and vinyl acetate; and unsaturated dihalides such as vinylidene chloride and 1,2-dichloroethylene can be given. Of these, aromatic vinyl compounds, particularly styrene and α-methylstyrene, are preferable.

As preferable specific examples of the conjugated diene polymer, natural rubber, isoprene polymer, butadiene polymer, styrene-butadiene copolymer, chloroprene polymer, acrylonitrile-butadiene copolymer, and combinations of two or more of these polymers can be given. Of these, isoprene polymer, butadiene polymer, and styrene-butadiene polymer are preferable, with isoprene polymer being particularly preferable.

The polystyrene-reduced weight average molecular weight (Mw) of the conjugated diene polymer determined by gel permeation chromatography (GPC) is preferably 10, 000-800, 000, more preferably 30,000-500,000, and particularly preferably 50, 000-350, 000. If the weight average molecular weight is low, the rubber vulcanizate may exhibit only poor mechanical strength. A high weight average molecular weight, on the other hand, may result in inferior damping properties.

The ratio (Mw/Mn) of the polystyrene-reduced weight average molecular weight (Mw) to the polystyrene-reduced number average molecular weight (Mn) determined by gel permeation chromatography (GPC) of the conjugated diene polymer is preferably 1.8 or less, more preferably 1.4 or less, and still more preferably 1. 2 or less. If a conjugated diene polymer with a large Mw/Mn ratio is used, the resulting cyclized conjugated diene polymer has a large Mw/Mn ratio.

As a conjugated diene polymer having a small Mw/Mn ratio, a polymer obtained by the anion living polymerization of the conjugated diene monomer and another monomer copolymerizable with the conjugated diene monomer can be preferably used.

To cyclize the conjugated diene polymer, the conjugated diene polymer dissolved in an inert solvent is reacted with the addition of a cyclization catalyst, for example. Alternatively, to cyclize the conjugated diene polymer, a polymerization reaction solution of the conjugated diene polymer is reacted with the addition of a cyclization catalyst.

As the cyclization catalyst, organic sulfonic acid compounds, such as methanesulfonic acid, fluoromethanesulfonic acid, difluoromethanesulfonic acid, and p-toluenesulfonic acid, and sulfuric acid are preferable, with organic sulfonic acid compounds being more preferable, inter alia, p-toluenesulfonic acid being particularly preferable.

If a conventionally known cyclization catalyst other than the above catalysts is used, a cyclized conjugated diene polymer with a large Mw/Mn ratio tends to be produced, even if a conjugated diene polymer with a small Mw/Mn ratio is used.

Although the amount of the catalyst used differs according to the structure of the conjugated diene polymer, the type of the cyclization catalyst, the target cyclization rate, the reaction condition of cyclization, and the like, the amount of the catalyst per mol of the conjugated diene monomer unit in the conjugated diene polymer is usually 0.001-10 mol%, and preferably 0.01-5 mol%.

As the inert solvent, aromatic hydrocarbon solvents such as benzene, toluene, xylene, and ethylbenzene; saturated hydrocarbon solvents such as n-pentane, n-hexane, n-heptane, n-octane, n-nonane, and n-decane; alicyclic hydrocarbon solvents such as cyclopentane, cyclohexane, cycloheptane, and cyclooctane; and the like can be used. Of these, hydrocarbon solvents having a boiling point of 70°C or higher, such as benzene, toluene, xylene, ethylbenzene, n-heptane, n-octane, n-nonane, n-decane, cyclohexane, cycloheptane, and cyclooctane are preferable.

The reaction temperature, reaction time, and the like of the cyclization reaction can be appropriately determined according to the target cyclization rate without any specific limitations. The reaction temperature is usually 20-110°C, preferably 50-100°C, and still more preferably 80-100°C. The reaction time is usually 1-20 hours, preferably 2-15 hours, and still more preferably 3-10 hours.

The rubber composition of the present invention comprises 100 parts by weight of the conjugated diene rubber and 5-100 parts by weight, preferably 5-90 parts by weight, and still more preferably 10-50 parts by weight of the cyclized conjugated diene polymer. If the content of the cyclized conjugated diene polymer is too small, the rubber vulcanizate exhibits only poor damping properties; if the content is too large, the mechanical strength is poor.

In addition to the above conjugated diene rubber and the cyclized conjugated diene polymer, the rubber composition of the present invention may comprise various additives for rubbers such as a reinforcing agent, softener, aging inhibitor, and wax.

The reinforcing agent is preferably added to increase the strength of the rubber vulcanizate.

As the reinforcing agent, carbon black, silica, clay, calcium carbonate, and magnesium silicate, for example, can be used. Of these, carbon black and/or silica are preferable in view of durability and strength.

Although not specifically limited, the reinforcing agent is added in an amount of preferably 5-100 parts by weight, more preferably from 5-90 parts by weight, and particularly preferably 10-80 parts by weight for 100 parts by weight of the conjugated diene rubber.

The softener improves the processability of the rubber composition. As the softener, process oils such as aromatic oil, naphthene oil, and paraffin oil and plasticizers such as dioctyl phthalate, for example, can be used. Of these, process oils, in particular, aromatic oil and naphthene oil, are preferable.

Although not specifically limited, the softener is added in an amount of usually 100 parts by weight or less, preferably 2. 5-90 parts by weight, and more preferably 5-80 parts by weight for 100 parts by weight of the conjugated diene.

As the aging inhibitor, an amine aging inhibitor, trimethyldihydroquinoline aging inhibitor, and phenol aging inhibitor can be used, for example. Of these, an amine aging inhibitor such as poly(2,2,4-trimethyl-1,2- dihydroquinoline) and N-isopropyl-N'-phenyl-p- phenylenediamine, phenol aging inhibitor such as 2,2'-methylene-bis(4-ethyl-6-t-butylphenol), and the like are preferable.

Although not specifically limited, the aging inhibitor is added in an amount of usually 0.1-10 parts by weight, preferably 0.5-7 parts by weight, and more preferably 1-5 parts by weight for 100 parts by weight of the conjugated diene rubber.

Wax may be added without any specific limitations inasmuch as the effect of the present invention is not substantially prevented. As the wax, paraffin wax, carnauba wax, and the like can be given.

Although not specifically limited, the wax is added in an amount of usually 0.1-100 parts by weight, and preferably 1-50 parts by weight for 100 parts by weight of the conjugated diene rubber.

The rubber composition of the present invention can be produced by kneading the conjugated diene rubber, cyclized conjugated diene polymer, and, optionally, various additives in a prescribed proportion.

A known kneading method used for manufacturing a common rubber composition can be used for kneading the conjugated diene rubber, cyclized conjugated diene polymer, and optionally used various additives without any specific limitations. As the apparatus for kneading, a batch-type kneader such as an open-end mill and sealing-type kneader; a continuous-type kneader such as a screw-type kneader (a uniaxial screw extruder, uniaxial kneader extruder, biaxial screw extruder, biaxial kneader extruder, etc.) rotor-type kneader (a uniaxial kneader, biaxial kneader, etc.); and the like can be used.

When the viscosity of the conjugated diene rubber is high, the mixture is preferably peptized prior to kneading, using a kneading apparatus such as a roll mill or a sealing-type kneader, optionally with the addition of a peptizing agent with an objective of lowering the viscosity and making processing easy.

### (Vulcanizable rubber composition)

The vulcanizable rubber composition of the present invention comprises the above rubber composition and a vulcanizing agent. The vulcanizable rubber composition can be vulcanized by heating.

Any vulcanizing agent can be used without any specific limitations insofar as such an agent can vulcanize the conjugated diene rubber.

As the vulcanizing agent, sulfur-donating compounds such as sulfur and tetramethylthiuram disulfide ;
peroxides such as dicumyl peroxide; and the like can be used. Of these, a sulfur-donating compound that can produce a vulcanizate exhibiting excellent durability is preferable, with sulfur being particularly preferable. Sulfur is economical and industrially easy to handle. As examples of the sulfur, powdered sulfur, colloidal sulfur, and insoluble sulfur can be given.

The vulcanizing agent is added in an amount of usually 0.1-100 parts by weight, preferably 0.3-50 parts by weight, more preferably 0.8-30 parts by weight, and particularly preferably 1-20 parts by weight for 100 parts by weight of the conjugated diene rubber. If the added amount is too small, vulcanization is insufficient and the damping rubber vulcanizate may have insufficient strength. If the amount of the vulcanizing agent is too large, the durability may be inadequate.

A vulcanization accelerator may preferably be added to the vulcanizable rubber composition. If the vulcanization accelerator is added, the vulcanizing time can be shortened, the vulcanizing temperature can be reduced, and the amount of vulcanizing agent incorporated can be decreased.

Any vulcanization accelerator can be used without any specific limitations insofar as such an agent can accelerate vulcanization of the conjugated diene rubber and does not prevent the function of the vulcanizing agent. As the vulcanization accelerator, when sulfur is used as the vulcanization agent, a guanidine vulcanization accelerator, thiazole vulcanization accelerator, sulfenamide vulcanization accelerator, thiuram vulcanization accelerator, dithioic acid salt vulcanization accelerator, and thiourea vulcanization accelerator can be used, for example.

Although not specifically limited, the vulcanization accelerator is added in an amount of usually 0.01-10 parts by weight, and preferably 0.1-5 parts by weight for 100 parts by weight of the conjugated diene rubber.

A vulcanizing auxiliary agent may be added to the vulcanizable rubber composition of the present invention. The vulcanizing auxiliary agent promotes the action of the vulcanizing agent.

As the vulcanizing auxiliary agent, any vulcanizing auxiliary agent may be used without specific limitations insofar as the addition of such a vulcanizing auxiliary agent does not interfere with the action of the vulcanizing agent. When a sulfur-donating compound is used as the vulcanizing agent, for example, zinc white(zinc oxide), litharge, minium, slaked lime, stearic acid, and amines can be used as the vulcanizing auxiliary agent.

Although not specifically limited, the vulcanizing auxiliary agent is added in an amount of usually 0.01-10 parts by weight, and preferably 0.1-5 parts by weight for 100 parts by weight of the conjugated diene rubber.

The vulcanizable rubber composition is prepared usually by adding the vulcanizing agent and, optionally, the vulcanization accelerator and vulcanizing auxiliary agent, to a previously adjusted rubber composition and kneading the mixture at a temperature lower than the vulcanization initiation temperature. It is possible to mix all the components of the vulcanizable rubber composition and knead the mixture at a temperature lower than the vulcanization initiation temperature.

### (Damping rubber vulcanizate)

The damping rubber vulcanizate of the present invention is obtained by vulcanizing the above vulcanizable rubber composition. To obtain a damping rubber vulcanizate with a desired form, the vulcanizable rubber composition may be either simultaneously formed and vulcanized or vulcanized after forming.

The vulcanizable rubber composition can be formed using a known molding machine such as a calendar roll, roller head extruder, extrusion molding machine, transfer molding machine, vacuum molding machine, and injection molding machine.

The method of vulcanizing the vulcanizable rubber composition, vulcanizing temperature, vulcanizing time, and the like are suitably adjusted according to the type, form, and the like of the vulcanizate.

As the method for heating, a known heating method commonly used for vulcanizing rubbers such as a press heating method, steam heating method, oven heating method, and hot air heating method can be appropriately selected.

As the vulcanizing apparatus, a conventional vulcanizing apparatus such as a vulcanizing pan, hot air vulcanizing apparatus, and UHF continuous vulcanizing apparatus can be used.

The vulcanizing temperature is usually 100-300°C, preferably 130-250°C, and still more preferably 140-220°C. If the vulcanizing temperature is too low, a long vulcanizing time is required, whereby productivity may decrease, or the vulcanizate has only a low vulcanization density, whereby the vulcanizate may fail to possess the desired properties. If the vulcanizing temperature is too high, the vulcanization proceeds too quickly, whereby a molding failure may occur.

The vulcanization time is usually from several seconds to several tens of hours, but preferably from 30 seconds to 5 hours from the viewpoint of the vulcanization density and production efficiency of the vulcanizate.

The damping rubber vulcanizate of the present invention can be suitably used for a quake-absorber for construction structures such as a building and a residence and for bridges; a shock energy reliever or absorber for vehicles, machines, and equipment; and the like.

### EXAMPLES

The present invention will now be described in detail by way of examples, which should not be construed as limiting the present invention. In the examples below "parts" and "%" are indicated on a weight basis unless otherwise specified.

Properties of the polymers and rubber vulcanizates were determined by the following methods.

### (1) Weight average molecular weight (Mw) and molecular weight distribution (Mw/Mn) of polymers

The weight average molecular weight of the polymers was calculated as a standard polystyrene-reduced value according to the GPC method. The value for the molecular weight distribution (Mw/Mn) of the polymers was calculated from the resulting GPC chart.

### (2) Cyclization rate

The cyclization rate was determined by measuring proton NMR according to the method described in the following documents
(i) and (ii).

(i) M. A. Golub and J. Heller, Can. J. Chem, 41, 937 (1963).
(ii) Y. Tanaka and H. Sato, J. Polym. Sci: Poly. Chem. Ed., 17, 3027 (1979).

### (3) Tensile strength (Tb), 300% tensile stress (M300), elongation (Eb), and hardness of rubber vulcanizate (HS)

The vulcanizable rubber composition was pressed and vulcanized for 15 minutes at 145°C to form a sheet of rubber vulcanizate with a size of 150 mm × 150 mm × 2 mm.

The obtained vulcanizate sheet was punched into test specimens in the shape of the Dumbbell No. 3. Using these test specimens, the tensile strength (Tb), the tensile stress at an elongation of 300%(M300) and elongation at break (Eb) were measured at a tensile speed of 500 mm/min according to JIS K6251, and the hardness (HS) was measured according to JIS K6253, to which the durometer hardness type A was applied.

### (4) Measurement of tanδ and elastic modulus (G')

A sheet of the rubber vulcanizate with a thickness of 2 mm was cut into small strips to measure tanδ at 23°C and 60°C (using a dynamic viscoelastimeter (RDA11, manufactured by Rheometric Scientific F. E.)) and the temperature variable spectrum of elastic modulus G'.

The ratio of the G' value at -20°C to the G' value at +60°C (G' (-20)/G'(+60)) was used as an index for the temperature dependency. The closer to 1 the value, the lower the temperature dependency of the elastic modulus. The higher the value of tanδ, the better the damping properties.

### Preparation Example 1

A four-necked flask equipped with a stirrer, a thermometer, a reflux condenser, and a nitrogen gas inlet tube was charged with 100 parts of polyisoprene (cis-1,4-isoprene unit: 86%, trans-1,4-isoprene unit: 12%, 3,4-isoprene unit: 2%, weight average molecular weight: 320,000, molecular weight distribution: 1.13) cut into 10 mm × 10mm × 10mm cubics, and 1,570 parts of toluene. After replacing the atmosphere in the flask with nitrogen gas, the flask was heated to 85°C over an oil bath. The mixture was stirred to completely dissolve the polyisoprene in toluene, thereby obtaining a toluene solution.

After adding 3.9 parts of p-toluenesulfonic acid to the toluene solution, the resulting solution was stirred at 85°C to effect the cyclization reaction. After about 5 hours, 400 parts of ion-exchanged water was added to terminate the reaction. The reaction solution was allowed to stand for 30 minutes to separate an oil layer from a water layer. The oil layer was collected. The collected oil layer was washed three times with 400 parts of ion-exchanged water, centrifuged at 300 rpm to remove water, and dried with heating to 130°C to obtain a crude reaction product.

The resulting crude reaction product was added to 3,000 parts of 1% solution of 2, 6-di-tert-butylphenol in methanol to collect a precipitate. The precipitate was dried under reduced pressure to obtain a cyclized polymer A. The cyclization rate, weight average molecular weight, and molecular weight distribution of the resulting cyclized polymer A are shown in Table 1.

### Preparation Example 2

The cyclization reaction was carried out in the same manner as in Preparation Example 1, except for using a polymer with a monomer composition of 73% of a cis-1,4-isoprene unit, 22% of a trans-1, 4-isoprene unit, and 5% of a 3, 4-isoprene unit and having a weight average molecular weight of 187,000 and a molecular weight distribution of 1.08 as polyisoprene and using p-toluenesulfonic acid in an amount of 3.6 parts. Next, the cyclization reaction solution was treated in the same manner as in Preparation Example 1 to obtain a cyclized polymer B. The cyclization rate, weight average molecular weight, and molecular weight distribution of the resulting cyclized polymer B are shown in Table 1.

### Preparation Example 3

The cyclization reaction was carried out in the same manner as in Preparation Example 1, except for using a polymer with a monomer composition of 28% of a cis-1,4-isoprene unit, 16% of a trans-1,4-isoprene unit, and 56% of a 3,4-isoprene unit and having a weight average molecular weight of 252,000 and a molecular weight distribution of 1.11 as polyisoprene and using p-toluenesulfonic acid in an amount of 3 parts. The cyclization reaction solution was treated in the same manner as in Preparation Example 1 to obtain a cyclized polymer C. The cyclization rate, weight average molecular weight, and molecular weight distribution of the resulting cyclized polymer C are shown in Table 1.

### Preparation Example 4

A four-necked flask equipped with a stirrer, a thermometer, a reflux condenser, and a nitrogen gas inlet tube was charged with 100 parts of polyisoprene (cis-1,4-isoprene unit: 73%, trans-1,4-isoprene unit: 22%, 3,4-isoprene unit: 5%, weight average molecular weight: 187,000, molecular weight distribution: 1.08) cut into 10 mm × 10 mm × 10 mm cubics, and 1,000 parts of toluene. After replacing the atmosphere in the flask with nitrogen gas, the flask was heated to 100°C over an oil bath. The mixture was stirred to completely dissolve the polyisoprene in toluene, thereby obtaining a toluene solution.

After adding 1 part of a boron trifluoride-phenol complex to the toluene solution, the resulting solution was stirred at 100°C to effect the cyclization reaction. After 2 hours, 10 parts of methanol was added to terminate the reaction. After adding 400 parts of ion-exchanged water, the reaction solution was allowed to stand for 30 minutes to separate an oil layer from a water layer. The oil layer was collected. The collected oil layer was washed three times with 400 parts of ion-exchanged water, centrifuged at 300 rpm to remove water, and dried with heating to 130°C to obtain a crude reaction product.

The resulting crude reaction product was added to 3,000 parts of 1% solution of 2, 6-di-tert-butylphenol in methanol to collect a precipitate. The precipitate was dried under reduced pressure to obtain a cyclized polymer D. The cyclization rate, weight average molecular weight, and molecular weight distribution of the resulting cyclized polymer D are shown in Table 1.

**TABLE 1**

| | Cyclization rate (%) | Weight average molecular weight (Mw) | Molecular weight distribution (Mw/Mn) |
|---|---|---|---|
| Cyclized polymer A | 73 | 263,000 | 1.23 |
| Cyclized polymer B | 78 | 146,000 | 1.19 |
| Cyclized polymer C | 68 | 214,000 | 1.28 |
| Cyclized polymer D | 74 | 130,900 | 2.87 |

### Example 1

100 parts by weight of natural rubber (Mooney viscosity (ML₁₊₄, 100°C) = 60), 10 parts of the cyclized polymer A, 50 parts of carbon black (SEAST 3, manufactured by Tokai Carbon Co., Ltd.), 2 parts of stearic acid, 3.5 parts of zinc oxide (Grade #1), 1 part of N-(1,3-dimethylbutyl)-N'-phenyl-p-phenylenediamine, and 10 parts of process oil (Flex M, manufactured by Fuji Kosan Co., Ltd.) were preliminarily kneaded using a Banbury mixer. Next, 1 part of N-cyclohexyl-2-benzothiazylsulfenamide, 0.15 part of 1, 3-diphenylguanidine, and 1.8 parts of sulfur (passed through 325 mesh) were added to the preliminarily kneaded product. The mixture was kneaded using a 6-inch roll at 50°C to obtain a vulcanizable rubber composition.

The resulting vulcanizable rubber composition was formed by pressing for 15 minutes at 145°C and vulcanized at the same time to form a sheet of rubber vulcanizate with a thickness of 2 mm. Properties of the rubber vulcanizate were measured. The results are shown in Table 2.

### Example 2

A sheet of rubber vulcanizate was obtained in the same manner as in Example 1, except for changing the amount of the cyclized polymer A from 10 parts to 20 parts. Properties of the rubber vulcanizate were measured. The results are shown in Table 2.

### Example 3

A sheet of rubber vulcanizate was obtained in the same manner as in Example 1, except for using the cyclized polymer B instead of the cyclized polymer A. Properties of the rubber vulcanizate were measured. The results are shown in Table 2.

### Example 4

A sheet of rubber vulcanizate was obtained in the same manner as in Example 1, except for using the cyclized polymer C instead of the cyclized polymer A. Properties of the rubber vulcanizate were measured. The results are shown in Table 2.

### Comparative Example 1

A sheet of rubber vulcanizate was obtained in the same manner as in Example 1, except that the cyclized polymer A was not added. Properties of the rubber vulcanizate were measured. The results are shown in Table 2.

### Comparative Example 2

A sheet of rubber vulcanizate was obtained in the same manner as in Example 1, except for using the cyclized polymer D instead of the cyclized polymer A. Properties of the rubber vulcanizate were measured. The results are shown in Table 2.

### Comparative Example 3

A sheet of rubber vulcanizate was obtained in the same manner as in Example 1, except for changing the amount of natural rubber from 100 parts to 90 parts and adding 10 parts of hydrogenated liquid isoprene rubber (UR-290, manufactured by Kuraray Co., Ltd.) and 15 parts of an oil resin (Neopolymer S, manufactured by Nippon Petrochemicals Co., Ltd.). Properties of the rubber vulcanizate were measured. The results are shown in Table 2.

**TABLE 2**

| | Example | | | | Comparative Example | | |
|---|---|---|---|---|---|---|---|
| | 1 | 2 | 3 | 4 | 1 | 2 | 3 |
| Composition | | | | | | | |
| Natural rubber | 100 | 100 | 100 | 100 | 100 | 100 | 90 |
| Cyclized polymer A | 10 | 20 | - | - | - | - | - |
| Cyclized polymer B | - | - | 10 | - | - | - | - |
| Cyclized polymer C | - | - | - | 10 | - | - | - |
| Cyclized polymer D | - | - | - | - | - | 10 | - |
| UR-290 | - | - | - | - | - | - | 10 |
| Neopolymer S | - | - | - | - | - | - | 15 |
| Properties of rubber vulcanizate | | | | | | | |
| Tb (MPa) | 25.5 | 24.6 | 24.5 | 24.3 | 26.1 | 22.1 | 21.6 |
| M300 (MPa) | 15.4 | 16.2 | 15.6 | 15.3 | 15.4 | 15 | 14.5 |
| Eb(%) | 480 | 470 | 480 | 490 | 490 | 480 | 510 |
| HS (A) | 72 | 75 | 73 | 74 | 67 | 68 | 69 |
| Tanδ (23°C) | 0.16 | 0.21 | 0.15 | 0.18 | 0.11 | 0.12 | 0.13 |
| Tanδ (60°C) | 0.28 | 0.26 | 0.24 | 0.29 | 0.20 | 0.23 | 0.25 |
| G' (-20)/G' (+60) | 2.3 | 2.1 | 2.5 | 2.1 | 2.8 | 2.6 | 3 |

The rubber vulcanizate comprising natural rubber but not containing a cyclized polymer (Comparative Example 1) exhibits insufficient damping properties.

The rubber vulcanizate comprising a rubber composition which contains the cyclized polymer D with a broad molecular weight distribution (Comparative Example 2) exhibits insufficient damping properties.

The conventional damping rubber vulcanizate prepared by adding hydrogenated liquid isoprene rubber and an oil resin to natural rubber (Comparative Example 3) exhibits improved damping properties as compared with the rubber vulcanizate comprising natural rubber (Comparative Example 1), but its elastic modulus depends significantly on the temperature, and the damping properties are not stable against the temperature change.

As compared with the rubber vulcanizates of these Comparative Examples, the rubber vulcanizates comprising a rubber composition which contains the cyclized polymer as defined in the present invention (Examples 1-4) exhibit sufficient rubber strength, excellent damping properties, low temperature dependency of the elastic modulus, and stable damping properties in the temperature range from -20°C to +60°C.

### INDUSTRIAL APPLICABILITY

The present invention provides a damping rubber vulcanizate having sufficient rubber strength and excellent damping properties in a wide range from a low temperature to a high temperature, and a rubber composition and a vulcanizable rubber composition suitable for producing the rubber vulcanizate.

## Claims

1. A rubber composition comprising 100 parts by weight of conjugated diene rubber and 5-100 parts by weight of a cyclized conjugated diene polymer with a cyclization rate of 25-90% and a ratio (Mw/Mn) of the polystyrene-reduced weight average molecular weight (Mw) to the polystyrene-reduced number average molecular weight (Mn), each determined by gel permeation chromatography, of 2 or less.

2. The rubber composition according to claim 1, wherein the polystyrene-reduced weight average molecular weight (Mw) of the cyclized conjugated diene polymer determined by gel permeation chromatography is 7,000-500,000.

3. The rubber composition according to claim 1, wherein the cyclized conjugated diene polymer is obtained by cyclizing a conjugated diene polymer with an isoprene unit content of 70 percent by weight or more.

4. The rubber composition according to claim 1, further comprising a reinforcing agent.

5. The rubber composition according to claim 4, wherein the reinforcing agent is added in an amount of 5-100 parts by weight for 100 parts by weight of the conjugated diene rubber.

6. A vulcanizable rubber composition comprising the rubber composition according to claim 1 and a vulcanizing agent.

7. The vulcanizable rubber composition according to claim 6, wherein the vulcanizing agent is added in an amount of 0.1-100 parts by weight for 100 parts by weight of the conjugated diene rubber.

8. The vulcanizable rubber composition according to claim 6, further comprising a vulcanization accelerator.

9. The vulcanizable rubber composition according to claim 8, wherein the vulcanization accelerator is added in an amount of 0.01-10 parts by weight for 100 parts by weight of the conjugated diene rubber.

10. A damping rubber vulcanizate obtained by vulcanizing the vulcanizable rubber composition according to claim 6.

## Patentansprüche

1. Kautschukzusammensetzung umfassend 100 Gewichtsteile von konjugiertem Dienkautschuk und 5-100 Gewichtsteile eines zyklisierten konjugierten Dienpolymers mit einem Zyklisierungsgrad von 25-90% und einem Verhältnis (Mw/Mn) des Polystyrolreduzierten gewichtsmittleren Molekulargewichts (Mw) zum Polystyrol-reduzierten zahlenmittleren Molekulargewicht (Mn), jedes bestimmt durch Gelpermeationschromatographie, von 2 oder weniger.

2. Kautschukzusammensetzung nach Anspruch 1, worin das Polystyrol-reduzierte gewichtsmittlere Molekulargewicht (Mw) des zyklisierten konjugierten Dienpolymers bestimmt durch Gelpermeationschromatographie 7.000-500.000 ist.

3. Kautschukzusammensetzung nach Anspruch 1, worin das zyklisierte konjugierte Dienpolymer durch Zyklisierung eines konjugierten Dienpolymers mit einem Isopreneinheitenanteil von 70 Gewichtsprozent oder mehr erhalten wird.

4. Kautschukzusammensetzung nach Anspruch 1 des weiteren einen Verstärkungsstoff enthaltend.

5. Kautschukzusammensetzung nach Anspruch 4, worin der Verstärkungsstoff in einer Menge von 5-100 Gewichtsteilen für 100 Gewichtsteile des konjugierten Dienkautschuks zugegeben ist.

6. Vulkanisierbare Kautschukzusammensetzung umfassend die Kautschukzusammensetzung nach Anspruch 1, und ein Vulkanisiermittel.

7. Vulkanisierbare Kautschukzusammensetzung nach Anspruch 6, worin das Vulkanisiermittel in einer Menge von 0,1-100 Gewichtsteilen für 100 Gewichtsteile des konjugierten Dienkautschuks zugegeben ist.

8. Vulkanisierbare Kautschukzusammensetzung nach Anspruch 6 des weiteren einen Vulkanisationsbeschleuniger umfassend.

9. Vulkanisierbare Kautschukzusammensetzung nach Anspruch 8, worin der Vulkanisationsbeschleuniger in einer Menge von 0,01-10 Gewichtsteilen für 100 Gewichtsteile des konjugierten Dienkautschuks zugegeben ist.

10. Dämpfendes Kautschukvulkanisat, erhalten durch Vulkanisieren der vulkanisierbaren Kautschukzusammensetzung nach Anspruch 6.

## Revendications

1. Composition de caoutchouc comprenant 100 parties en poids de caoutchouc de diène conjugué et 5 à 100 parties en poids d'un polymère de diène conjugué cyclisé avec un taux de cyclisation de 25 à 90% et un rapport (MW/MN) du poids moléculaire moyen en poids rapporté au polystyrène (MW) sur le poids moléculaire moyen en nombre rapporté au polystyrène (MN) de 2 ou moins, chacun étant déterminé par chromatographie d'exclusion sur gel.

2. Composition de caoutchouc selon la revendication 1, dans laquelle le poids moléculaire moyen en poids rapporté au polystyrène (MW) du polymère de diène conjugué cyclisé déterminé par chromatographie d'exclusion sur gel est de 7000 à 500000.

3. Composition de caoutchouc selon la revendication 1, dans laquelle le polymère de diène conjugué cyclisé est obtenu par cyclisation d'un polymère de diène conjugué avec une teneur en unité isoprène de 70% en poids ou plus.

4. Composition de caoutchouc selon la revendication 1, comprenant de plus un agent de renforcement.

5. Composition de caoutchouc selon la revendication 4, dans laquelle l'agent de renforcement est ajouté en une quantité de 5 à 100 parties en poids pour 100 parties en poids du caoutchouc de diène conjugué.

6. Composition de caoutchouc vulcanisable comprenant la composition de caoutchouc selon la revendication 1 et un agent de vulcanisation.

7. Composition de caoutchouc vulcanisable selon la revendication 6, dans laquelle l'agent de vulcanisation est ajouté en une quantité de 0,1 à 100 parties en poids pour 100 parties en poids du caoutchouc de diène conjugué.

8. Composition de caoutchouc vulcanisable selon la revendication 6, comprenant de plus un accélérateur de vulcanisation.

9. Composition de caoutchouc vulcanisable selon la revendication 8, dans laquelle l'accélérateur de vulcanisation est ajouté en une quantité de 0,01 à 10 parties en poids pour 100 parties en poids du caoutchouc de diène conjugué.

10. Produit de vulcanisation de caoutchouc amortisseur obtenu par vulcanisation de la composition de caoutchouc vulcanisable selon la revendication 6.
